# EUROPEAN PATENT SPECIFICATION

(11) **EP 0 843 759 B1**
(45) Date of publication and mention of the grant of the patent: **12.11.2003**
(21) Application number: 96927973.6
(22) Date of filing: 09.08.1996
(51) Int. Cl.: E02B 7/20

(54) **METHOD FOR THE FABRICATION OF A DAM OR BARRIER**
VERFAHREN ZUR ERRICHTUNG EINES DAMMS ODER EINE BARRIERE
PROCEDE DE CONSTRUCTION D'UN BARRAGE OU D'UNE BARRIERE

(30) Priority: 11.08.1995 SE 9502817
(43) Date of publication of application: 27.05.1998
(73) Proprietor: Kullberg, Sten, 583 32 Linköping (SE)
(72) Inventor: Kullberg, Sten, 583 32 Linköping (SE)
(74) Representative: Berglund, Erik Wilhelm
(86) International application number: PCT/SE96/01002
(87) International publication number: WO 97/007290

(56) References cited:
- DE-A- 3 527 100
- GB-A- 2 269 618
- US-A- 4 136 995
- US-A- 4 692 060
- US-A- 4 921 373
- US-A- 5 040 919

## Description

In order to dam up water and reduce the damages at flooding, respectively it is known to build dams and barriers to reduce the flooded area in different ways and with different devices. Most widely known is probably the use of sandbags, but this requires great amounts of work and require also access to sand. Furthermore it is known to fill more or less tube like structures with water and then to anchor these. This way to achieve the damming is comparatively fast since water quickly can be pumped into the tube like devices. These devices however become comparatively expensive. Since furthermore the water-filled tubes in comparison to the sandbags not are heavier than the water, they might altogether to easy be lifted and flow away if the lifting force of the water gets a possibility to work. The general opinion is therefor that a flood protection must have a great weight, even if this result in much work and consequently limited possibilities to fight floods.

It is also known from US 4,136,995 and DE 3527 100 to use inclined, groundanchored framework supports, on the waterside of which membranes are arranged transferring the pressure of the water to the supports.

To sum up one can say that the ways that today are available for the damming up of water and reduce floods are not satisfactory. They are either to expensive or too time and work requiring.

In view of the above there is a need of a practical way to achieve the damming of water in more or less catastrophic situations, that is fast and that does not require large investments.

The invention has as its objects to provide such a method and the required means for this.

An extremely stable, and quickly in large lengths achievable protection at low costs can according to the invention be achieved by placing inclined loading pallets side by side against supports and in such a way that they are inclined outward from the water whereafter at the waterside of the loading pallets is applied a suitable membrane, tarpaulin or the like over the loading pallets and a distance in front of these.

The membrane is towards the water facing edge preferably weighed down by stones, sandbags or even loose dirt or sand e t c, in order to secure an initial contact for the membrane with the ground, that is a moderate amount of for instance sandbags is required, when the water then comes the water pressure will help to keep the membrane pressed down against the ground.

The supports holding the loading pallets in the intended angle is preferably constituted by three beams that on use are connected to a triangle and that otherwise may be stored in a folded state. The supports are influenced by the forces exerted on the loading pallets straight downwards as well as outward from the water.

The inclination must be chosen so that the force resultant of the water pressure intersects the ground well in front of the rear of the support, that otherwise would tilt over when the water gets high. Also the inclination must not be too steep in order to result in sufficient vertical force to allow the dam a sufficient grip in the ground or in some cases a sufficient friction. Also the inclination must be steep enough to give a good dam height for the cost. An inclination angle of 45° has been found to be a good choice.

In order to cope with the vertical loads and prevent the supports from sinking down through the ground when this after some time is softened by the penetration of water for instance additional, preferably up side down turned, loading pallets may be used lying against the ground.

In order to take up the horizontal forces directed away from the water spades or the like anchors pushed down into the ground may be used if the friction forces generated by the vertical forces are insufficient. Often there are also pavements, curb stones, trees or other objects against which the supports may be supported. Also the part of the membrane that is in contact with the ground contribute to holding the loading pallets on their places since the membrane is pressed by the water against the ground and the loading pallets respectively with considerable forces. In particular with a broad contact area for the membrane against the ground large forces are achievable.

Support means for the loading pallets are preferably more or less special for this purpose designed simple supports, that preferably may be foldable or in some other way so constructed that a tight packing is possible when they are transported or stored.

The use of loading pallets has a number of advantages. To start with they are very strong and can therefore with a good margin handle the loads in question. Secondly and not least important is that loading pallets are almost always available in very large quantities. Furthermore the cost is low in case they should be destroyed. Probably however they may be reused as loading pallets when once the dam is removed. By arranging the loading pallets on their sides with the largest dimension lengthwise of the dam or on their ends an adaption to the required needs in respect of length or height may be achieved.

The location or positioning of the loading pallets on the support means may if so is required take place by gripping, snapping or even nailing or screwing. Since the loading pallets are arranged inclined such a large vertical force is achieved that friction will normally provide a satisfactory horizontal locking.

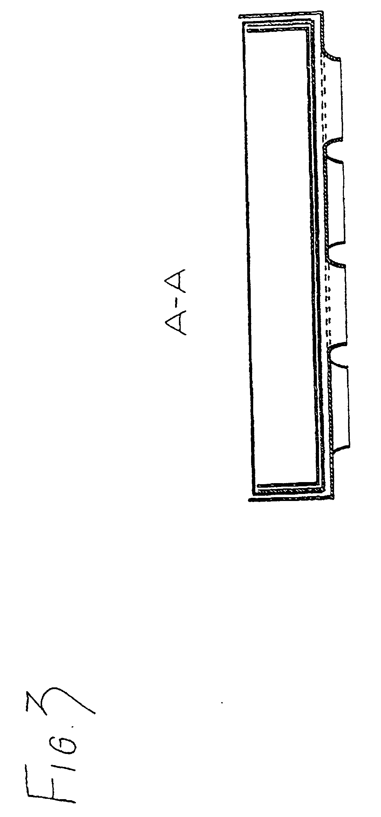

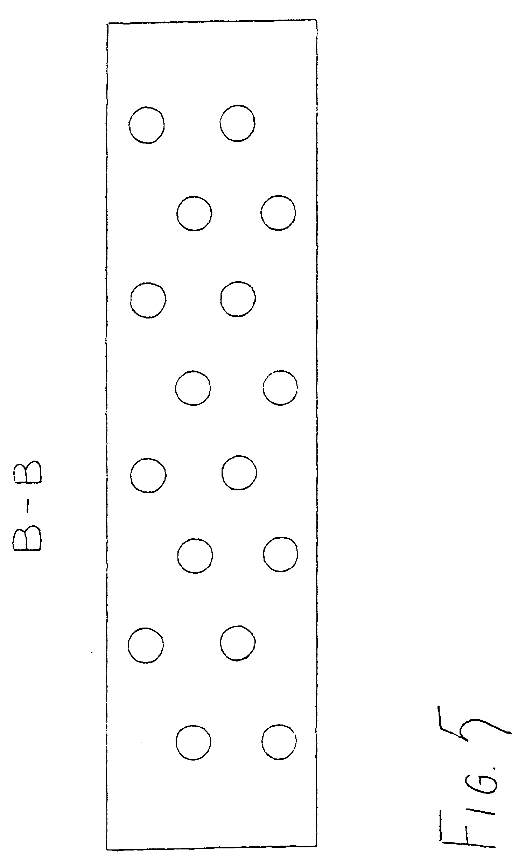

The invention is below described in detail by way of an example of an embodiment shown in the enclosed drawings. Fig 1 shows a cross section through a dam in accordance with the invention, fig 2 a support means in accordance with the invention in its working position and fig 3 - 5 the same device in its position for storage in cross section, longitudinal section and bottom view respectively.

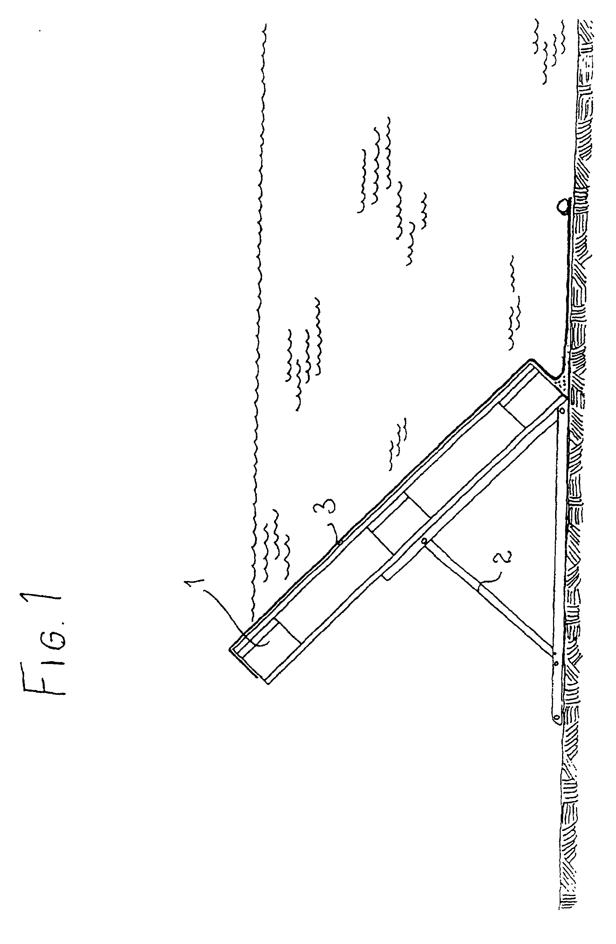

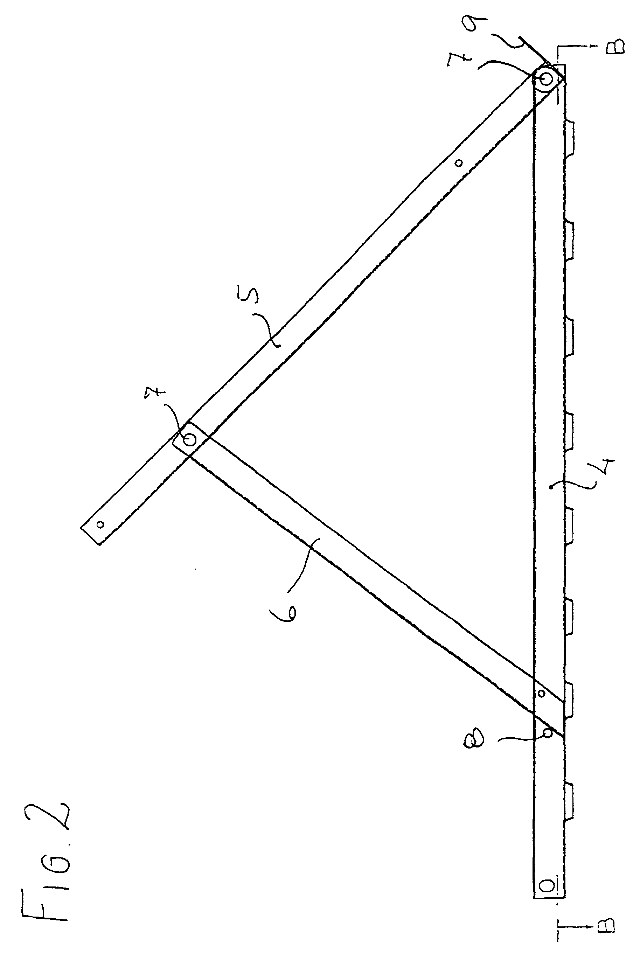

The dam shown in fig 1 includes an inclined loading pallet 1. The loading pallet is in this case inclined 45° in relation to the ground. The loading pallet is held in this position by a support, which in its entirety has been given the reference number 2. On the side of the loading pallet that is turned against the water a membrane 3, tarpaulin or the like is placed extending from the upper edge of the loading pallet down over the loading pallet and a distance along the ground in under the water. The membrane can at the upper end of the loading pallet be held by means of clamps, be nailed or be held between the loading pallet and the supports. In the transition between the loading pallet and the ground, preferably gravel or something else may be arranged as a filler, alternatively the membrane is so placed that it follows the transition between the loading pallet and the ground, this so that a frail membrane not risks being stretched and torn apart by the water pressure. In reality it has however been discovered that many of the membranes available on the market are so strong that they without problem can handle the folds and stresses that may result. The membrane 3 is in its lower, under the water projecting end held forcefully against the ground by stones sandbags or something else placed thereon. Since the membrane furthermore is held down by the water pressure it is only necessary with sufficient stones or sandbags to prevent the membrane from being swept up by possible streams or whirls in the water or when it first arrives.

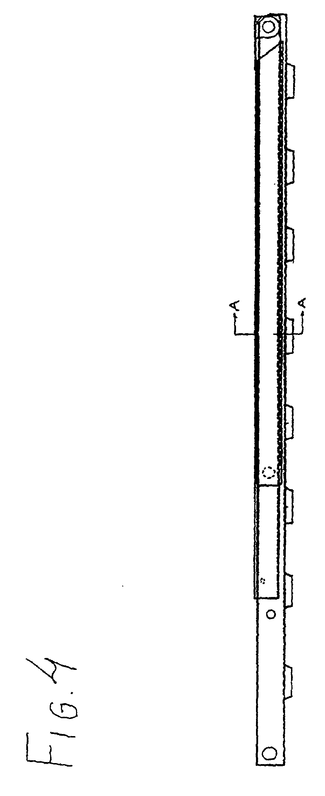

The support 2 is constituted by essentially three parts: a lower or bottom beam 4, an inclined part 5 for a loading pallet to lie on and a third inclined part 6 extending between the two first mentioned beams fixing the shape. The beams are constituted by U-shaped sheet metal profiles with somewhat different widths so that they on storage and transport may be inserted into each other in the way that is shown in fig 3. The lengths of the three parts are so adapted that the intended angled inclination of 45° is obtained for the loading pallets. The part 5, that is in contact with the rear side of the loading pallet is in its lower end bolted to the lower beam 4 and also the third beam is bolted or riveted to the beam 5 lying against the loading pallet. The bolts 7 are arranged in the flanges of the beams so that the beams will be hingedly connected to each other in two of the corners of the triangle. The bolts are not drawn tight which would reduce movability and the holes are also rather wide allowing the beams to rest on each other instead of relying on the bolt connections for force transfer. This also secures that the beams always will be movable relative each other even if the supports are used or stored during adverse condition for very long time.

The lower beam 4, the one in contact with the ground, is in its rear end provided with a transverse bolt 8 gripping into holes in the flanges where it may be fastened by means of simple spring rings. The bolt supports and locates the lower end of the third beam 6 on mounting. In the front end of the lower beam (the end of the beam that is turned against the water) a flap or lid 9 is with its flanges fastened to the hinge connections of the beams to serve as a lower stop or support for the loading pallet 1.

In the bottom of the lower beam circular collars are punched for an increased grip in or on the ground. Each circular collar has two teeth to improve grip also. The openings in the collars may also serve as extra anchor points for any object that is inserted for an increased grip on loose ground. For instance pieces of tubing, pieces of wood or even broken pieces of branches may be used. If the ground is hard and even concrete or sensitive instead rubber inserts may be placed in the holes in the bottom beam.

The upper beam has its flanges turned upwards and has a width slightly larger than double the width of a loading pallet leg. In this way each support may grip two pallets standing on their ends holding these together and no additional means are needed to connect the pallets. This also results in an easy handling on mounting. Each pallet may be leaned against the preceding support and then the next support may be added e t c. It is in other words not necessary to handle support and pallet simultaneously. In order further to facilitate mounting the upper beam is provided with a handle, in the shape of a band running through two slots, for a quick and trouble free raising of the support even if visibility is poor and gloves must be used.

If the carrying or supporting ability of the ground is poor the support may be placed on a preferably up side down placed loading pallet so that an even better load distribution is achieved. By turning the loading pallet up side down the support may be placed in the downward facing openings (normally facing downwards when a loading pallet is used) and in this way the inclined upper loading pallet 1 will not be more than a few centimeters higher than otherwise at the same time as the supporting surface is increased essentially. Since only a moderate increase in height is obtained the need for filler at the lower end of the inclined loading pallet will not be increased when preventing the membrane from lying freely there.

Preferably the lower beam is as it is shown in the drawing the longest one and has the broadest u-shaped profile. At transport and storage the beams grip into each other in the way that is shown fig 3.

In order to facilitate the mounting of loading pallet and support nail holes may be provided in the support, through which the support device may be fixed at respective loading pallet or pallets with a simple nail or screw.

In the flanges of the lower and the third beams corresponding fixing holes are arranged for the insertion of a small pin locking the support, if for instance this is assembled with the pallet on land, then to be submerged in the water as an entity.

Also holes are arranged in the upper beam for the fastening of the support to the pallets when these are placed on their sides and therefor the flanges of the beam do not grip over any pallet legs.

Since the loading pallets are made from wood joining or connecting of the dam at corners and other irregularities may be achieved by nailing of boards or for instance triangular structures or lids that possibly are nailed to the loading pallet. This can also take place very quickly and very simple. The lids may be provided with hinges and folded flat on the beams during storage and transport.

The invented method result in itself and in particular together with the support according to the invention in a very great efficiency in relation to the required investment cost and in particular in comparison with prior art. The method may when the invention has well been made seem remarkable simple, but is in view of the known technique not close at hand. The reason why inventive work has been needed to arrive at the invented method is presumably that no one has believed that it is possible to achieve a simple dam made of material that can actually float on water, and that the great pressure of the water seen from a normal point of view would easily push such a dam aside. As has been described above the necessary forces to hold back the water can however be provided by the weight of the water itself.

The support that is described above or varieties thereof can be fabricated in large quantities at low cost and also be stored with small costs since the volume is small. Loading pallets are almost always at hand in god quantities and with a short transportation. For instance most industries of necessity has a number of loading pallets as well as wholesale sellers, retailers e t c. In other words at a sudden catastrophe comparatively quickly, locally, a large amount of loading pallets can be collected that can be used to build dams. The only thing that must be purchased in advance are the supports and these are due to their simple structure not expensive and they can be stored in a minimum of space.

The work with the building of a dam of the above described type is as it is realized done very quickly by placing the support on the intended place and a loading pallet is lifted into the support, alternatively mounting of the support on a loading pallet may take place first, for instance on a truck and then together be placed on the intended location and be connected in required degree. Thereafter a suitable filling that is at hand may be placed between the lower edge of the loading pallet and the ground (if sensitive membranes are used). The membrane is put on top and its edges fixed in the water or lower end by means of rocks or other materials that are at hand and in the upper end by means of special means or nails staples e t c. Since at the invented method in reality any membrane or the like may be used also the readiness of the invented method is very high.

The invented and above described support also allows quick mounting despite the small transport or storage volume since the support quickly can be transferred from a transport position to its working position. Since the entire method requires a relatively small amount of separate steps or manipulations a dam or barrier can be achieved very rationally as on a running band, that is every person only has to execute a few grips or mounting steps and does consequently not have to think about what is to be done next all the time. Also every one can quickly understand and handle the invented support.

The invention constitute a great step forward in the fighting of flooding.

Since the loading pallet in itself constitute a well drained structure there is no risk that water leaking through or past the membrane builds up a pressure that can destroy the dam.

When the dam according to the invention well has been achieved it may serve as a base for a continued building if a higher dam is needed. It is easy to fasten additional supporting timber in the loading pallets by means of nails or screws. The fastening of for instance an additional row of loading pallets on top of an already existing row of loading pallets is comparatively simple as the arrangement of the required additional supports, weather these are prefabricated or in the shape of loose timber, this since the additional timbering or supports may be added peace by piece. When adding height increasing parts to the dam of the invention one must of course remember to provide additional lateral support since otherwise the entire dam might tilt. The loading pallets of the standard european type will give a dam height of 65 or 100 centimeters depending on pallet orientation.

It is also conceivable to construct supports intended for greater dam heights, for instance two pallets high or units specially designed to add on the above described supports, for instance constituting an upper extension beam extending the upper one and a number of inclined support beams or struts that in their lower ends may rest on one or several lower beams, that may be adaptable to uneven ground by being fastenable to each other in different positions.

Tests with the invention have shown that one person easily in one day builds 200 - 300 meters of a dam and a moderate swimming pool or fire dam can be built by one person in a quarter of an hour. A house can be protected in a matters of hours by one person. With a barrier height of one meter each single pallet corresponds to the use of 50 sandbags each weighing 30 kg.

The use of the dam of the invention is not limited to floodings but may also be used to achieve channels or basins of different kinds, as for instance swimming pools, for the storage of polluted water, sludge, manure, urea, contaminated earth, ash, waste e t c. Furthermore a barrier may be obtained for drying water areas, for instance at building in water (bridges, piers, outlets and inlets to artificial bathing lakes e t c).

## Claims

1. Method for the fabrication of a water dam or barrier, **characterized by** placing inclined loading pallets side by side against supports and in such a way that they are inclined outward from the water whereafter at the waterside of the loading pallets is applied a suitable membrane, tarpaulin or the like over the loading pallets and extending outwardly along the bed of the waterway in front of these.

2. Method according to claim 1, **characterized in** the supports being prefabricated.

3. Method according to claim 1, **characterized in** the supports being constituted by two additional loading pallets fastened together with the first one.

4. Method according to claim 1, **characterized in** the supports being prefabricated and foldable.

5. Method according to any of the preceding claims, **characterized in** the membrane being fixed to the upper edge of the loading pallets.

6. Method according to any of the preceding claims, **characterized in** the membrane in front of the loading pallets being held down in place by sand bags, rocks or the like, or that the front edge of the membrane is inserted into the ground or in some other way fastened and/or sealed against the ground.

7. Method according to any of the preceding claims, **characterized in that** in the angle between the lower end of the loading pallet and the ground are arranged suitable, in particular on the site found means, as for instance gravel to support the membrane between the loading pallet and the ground.

8. Method according to any of the preceding claims, **characterized in** the angle of inclination being such in relation to the support that the rearmost support point against the ground lies behind the point at which the resultant of the water pressure forces on the loading pallet intersects the ground, and that the inclination is sufficient to secure a sufficient vertical force on the ground to secure a grip on the ground sufficient to prevent the dam to be pushed sideways on the ground.

9. A water dam or barrier comprising support frames and a web of flexible material, a membrane of tarpaulin or the like, placed over said supports and extending outwardly along the bed of the waterway, **characterized in that** loading pallets are placed side by side and inclined against the supports; said supports being triangular supports, including three beams that on use are connected to form the triangle and that otherwise may be stored in a folded state; at the waterside the loading pallets are covered by the membrane

10. A water dam or barrier according to claim 9, **characterized in that** the beams are U-beams with different widths, that when not used can be stored in each other.

11. A water dam or barrier according to any of the claims 9 - 10, **characterized in that** the beams at two corners of the triangle are permanently hingedly joined to each other whereas in the third corner a bolt or the like is used as a connection or as an end stop for the beams.

12. A water dam or barrier according to any of the claims 9 - 11, **characterized in that** the support in the part that on use is turned against the ground is provided with circular open collars or other means that may even be provided with teeth to improve the grip on the ground or rubber inserts for smooth hard or sensitive ground, or through which extra anchoring objects may be inserted.

13. A water dam or barrier according to any of the claims 9 - 12, **characterized in that** the upper beam is U-shaped and with a width that enables it to grip over the adjoining legs of two proximate loading pallets i order to hold these together.

14. A water dam or barrier according to any of the preceding claims 9 - 13, **characterized in that** it is provided with means gripping under the loading pallet.

15. A water dam or barrier according to any of the preceding claims 9 - 14 **characterized in that** it is provided with means, for instance in the shape of holes, for the anchoring or joining of extension parts upwards and rearward in order to increase the height.

## Patentansprüche

1. Verfahren zum Herstellen eines Wasserdamms oder einer Wassersperre, **dadurch gekennzeichnet, daß** genelgte Transportpaletten nebeneinander gegen Abstützungen angeordnet werden, und zwar derart, daß sie vom Wasser nach außen geneigt verlaufen und daß anschließend an der Wasserseite der Transportpaletten eine geeignete Membrane, Plane oder dergleichen über den Transportpaletten aufgebracht wird, welche nach außen längs dem Bett des Wasserlaufs an der Vorderseite derselben verläuft.

2. Verfahren nach Anspruch 1, **dadurch gekennzeichnet, daß** die Abstützungen vorgefertigt sind.

3. Verfahren nach Anspruch 1, **dadurch gekennzeichnet, daß** die Abstützungen von zwei zusätzlichen Transportpaletten gebildet werden, welche mit der ersten Transportpalette fest verbunden werden.

4. Verfahren nach Anspruch 1, **dadurch gekennzeichnet, daß** die Abstützungen vorgefertigt und zusammenlegbar sind.

5. Verfahren nach einem der vorangehenden Ansprüche, **dadurch gekennzeichnet, daß** die Membrane fest mit dem oberen Rand der Transportpaletten verbunden wird.

6. Verfahren nach einem der vorangehenden Ansprüche, **dadurch gekennzeichnet, daß** die Membrane auf der vorderen Seite der Transportpaletten durch Sandsäcke, Steinbrocken oder dergleichen niedergehalten wird, oder daß der vordere Rand der Membrane in den Untergrund eingeschoben oder auf eine andere Weise festgelegt und/oder gegenüber dem Untergrund abgedichtet wird.

7. Verfahren nach einem der vorangehenden Ansprüche, **dadurch gekennzelchnet,** daß der Winkel zwischen dem unteren Ende der Transportpalette und dem Untergrund in geeigneter Weise insbesondere am Untergrund bzw, der Fundamentierung am Aufstellungsort, beispielsweise durch Schotter, derart gewählt ist, daß die Membrane zwischen der Transportpalette und dem Untergrund abgestützt ist.

8. Verfahren nach einem der vorangehenden Ansprüche, **dadurch gekennzeichnet, daß** der Neigungswinkel bezüglich der Abstützung derart gewählt ist, daß der am weitesten hintenliegende Abstützpunkt gegen den Untergrund unter dem Punkt liegt, an dem die resultierenden Kräfte des auf die Transportpalette wirkenden Wasserdrucks den Untergrund schneiden, und daß die Neigung derart ausreichend gewählt ist, daß eine ausreichende vertikale Kraft auf den Untergrund sichergestellt ist, um eine Greifwirkung auf dem Untergrund in einer solchen ausreichenden Weise sicherzustellen, daß verhindert wird, daß der Damm auf dem Untergrund zur Seite gedrückt wird.

9. Wasserdamm oder Wassersperre mit Stützrahmen und einer Bahn aus flexiblem Material, einer Membrane aus einer Plane oder dergleichen, welche über die Stützen gelegt sind und längs des Betts des Wasserlaufs nach außen verlaufen, **dadurch gekennzeichnet, daß** die Transportpaletten nebeneinanderliegend und gegen die Stützen geneigt angeordnet sind, daß die Stützen dreieckförmige Träger sind und drei Träger umfassen, welche im Gebrauchszustand in Form eines Dreiecks verbunden sind und die ansonsten im zusammengefalteten Zustand vorrätig gehalten werden können, und daß die Transportpaletten wasserseitig mit der Membrane überdeckt sind.

10. Wasserdamm oder Wassersperre nach Anspruch 9, **dadurch gekennzeichnet, daß** die Träger U-Träger mit unterschiedlichen Breiten sind, und die im Nichtgebrauchszustand Ineinander verstaut werden können.

11. Wasserdamm oder Wassersperre nach einem der Ansprüche 9 bis 10, **dadurch gekennzeichnet, daß** die Träger an zwei Ecken des Dreiecks ständig gelenkig miteinander verbunden sind, während an der dritten Ecke eine Schraube, ein Bolzen oder dergleichen, als eine Verbindung oder als ein Endanschlag für die Träger vorgesehen ist.

12. Wasserdamm oder Wassersperre nach einem der Ansprüche 9 bis 11, **dadurch gekennzeichnet, daß** die Abstützung an dem Teil, welches im Gebrauchszustand gegen den Untergrund gedreht wird, mit kreisförmigen, offenen Bundteilen oder anderen Einrichtungen versehen ist, die auch mit Zähnen versehen sein können, um den Haltegriff auf dem Untergrund oder Kautschukeinsätzen bei einem glattharten oder empfindlichen Untergrund zu verbessern, oder durch die gesonderte Verankerungen für Einrichtungen eingeführt werden können.

13. Wasserdamm oder Wassersperre nach einem der Ansprüche 9 bis 12, **dadurch gekennzeichnet, daß** der obere Träger U-förmig ausgebildet ist und eine Breite hat, welche ermöglicht, daß ein Ergreifen über die angrenzenden Schenkel der beiden nächstliegenden Transportpaletten ermöglicht wird, um diese zusammen zu halten.

14. Wasserdamm oder Wassersperre nach einem der vorangehenden Ansprüche 9 bis 13, **dadurch gekennzeichnet, daß** er mit einer Einrichtung versehen ist, welche ein Untergreifen der Transportpalette gestattet.

15. Abstützung nach einem der vorangehenden Ansprüche 9 bis 14, **dadurch gekennzeichnet, daß** er mit einer Einrichtung, beispielsweise in Form von Öffnungen zur Verankerung oder zur Verbindung von Verlängerungsteilen in Richtung nach oben und hinten versehen ist, um die Höhenabmessungen zu vergrößern.

## Revendications

1. Procédé pour la fabrication d'un barrage ou d'une barrière à l'eau, **caractérisé par** la mise en place de palettes inclinées les unes à côté des autres contre des supports et de telle sorte qu'elles soient inclinées vers l'extérieur par rapport à l'eau, après quoi on applique, au niveau du bord en contact avec l'eau des palettes, une membrane adaptée, une bâche, ou similaire, par dessus les palettes et qui s'étend vers l'extérieur le long du lit du cours d'eau devant celles-ci.

2. Procédé selon la revendication 1, **caractérisé en ce que** les supports sont préfabriqués.

3. Procédé selon la revendication 1, **caractérisé en ce que** les supports sont constitués de deux palettes supplémentaires attachées l'une à l'autre au moyen de la première.

4. Procédé selon la revendication 1, **caractérisé en ce que** les supports sont préfabriqués et pliables.

5. Procédé selon l'une quelconque des revendications précédentes, **caractérisé en ce que** la membrane est fixée au bord supérieur des palettes.

6. Procédé selon l'une quelconque des revendications précédentes, **caractérisé en ce que** la membrane en face des palettes est maintenue en place par des sacs de sable, des rochers ou similaires, ou **en ce que** le bord avant de la membrane est inséré dans le sol ou d'une toute autre manière attaché et/ou scellé contre le sol.

7. Procédé selon l'une quelconque des revendications précédentes, **caractérisé en ce que** dans l'angle entre l'extrémité inférieure de la palette et le sol sont agencés de manière adaptée, en particulier sur les moyens trouvés sur le site, comme par exemple du gravier, pour supporter la membrane entre la palette et le sol.

8. Procédé selon l'une quelconque des revendications précédentes, **caractérisé en ce que** l'angle d'inclinaison a une disposition par rapport au support telle que le point du support le plus éloigné contre le sol se situe derrière le point au niveau duquel la résultante des forces de pression de l'eau sur la palette intersecte le sol, et **en ce que** l'inclinaison est suffisante pour garantir une force verticale suffisante sur le sol pour garantir une prise sur le sol suffisante pour empêcher que le barrage ne soit poussé latéralement sur le sol.

9. Barrage ou barrière à l'eau comprenant des cadres de support et une toile de matériau souple, une membrane, une bâche ou similaire placée par dessus lesdits supports et s'étendant vers l'extérieur le long du lit du cours d'eau, **caractérisé en ce que** les palettes sont placées les unes à côté des autres et sont inclinées contre les supports ; lesdits supports étant des supports triangulaires, comprenant trois poutres qui à l'usage sont connectées pour former le triangle et qui autrement peuvent être stockées dans un état plié ; au niveau du bord en contact avec l'eau les palettes sont couvertes par la membrane.

10. Barrage ou barrière à l'eau selon la revendication 9, **caractérisé en ce que** les poutres sont des poutres en forme de U avec des largeurs différentes, qui, lorsqu'elles ne sont pas utilisées, peuvent être stockées les unes dans les autres.

11. Barrage ou barrière à l'eau selon l'une quelconque des revendications 9 et 10, **caractérisé en ce que** les poutres au niveau de deux coins du triangle sont jointes en permanence de manière pivotante l'une à l'autre tandis qu'au niveau du troisième coin un boulon ou similaire est utilisé en tant que connexion ou en tant que butée d'extrémité pour les poutres.

12. Barrage ou barrière à l'eau selon l'une quelconque des revendications 9 à 11, **caractérisé en ce que** le support au niveau de la partie qui à l'usage est tournée contre le sol est muni de colliers ouverts circulaires ou d'autres moyens qui peuvent même être munis de dents pour améliorer la prise sur le sol ou de pièces rapportées en caoutchouc pour un sol sensible ou dur et lisse, ou à travers lequel des objets de fixation supplémentaires peuvent être insérés.

13. Barrage ou barrière à l'eau selon l'une quelconque des revendications 9 à 12, **caractérisé en ce que** la poutre supérieure est en forme de U et a une largeur qui lui permet de mettre en prise les montants attenants de deux palettes proches afin de les maintenir ensemble.

14. Barrage ou barrière à l'eau selon l'une quelconque des revendications précédentes 9 à 13, **caractérisé en ce qu'**il est muni de moyens venant en prise sous la palette.

15. Barrage ou barrière à l'eau selon l'une quelconque des revendications précédentes 9 à 14, **caractérisé en ce qu'**il est muni de moyens, par exemple sous la forme de trous, pour la fixation ou la jonction de parties d'extension vers le haut et vers l'arrière afin d'augmenter la hauteur.
